# EUROPÄISCHE PATENTSCHRIFT

(11) **EP 3 967 518 B1**
(45) Veröffentlichungstag und Bekanntmachung des Hinweises auf die Patenterteilung: **07.05.2025**
(21) Anmeldenummer: 21187897.0
(22) Anmeldetag: 27.07.2021
(51) Int. Cl.: B60C 11/00

(54) **FAHRZEUGLUFTREIFEN UND VERFAHREN ZU HERSTELLUNG EINES LAUFSTREIFENS FÜR EINEN FAHRZEUGLUFTREIFEN**
PNEUMATIC VEHICLE TYRE AND METHOD FOR THE PRODUCTION OF A TREAD FOR A PNEUMATIC VEHICLE TYRE
PNEUMATIQUE DE VÉHICULE ET PROCÉDÉ DE FABRICATION D'UNE BANDE DE ROULEMENT POUR UN PNEU DE VÉHICULE

(30) Priorität: 14.08.2020 DE 102020210391
(43) Veröffentlichungstag der Anmeldung: 16.03.2022
(73) Patentinhaber: Continental Reifen Deutschland GmbH, 30175 Hannover (DE)
(72) Erfinder: Biabanaki, Seyedomidreza, 30419 Hannover (DE)
(74) Vertreter: Continental Corporation

(56) Entgegenhaltungen:
- EP-A1- 2 108 525
- EP-A1- 2 108 530
- EP-A1- 2 138 325

## Beschreibung

Die Erfindung betrifft einen Fahrzeugluftreifen für Nutzfahrzeuge mit einer Radialkarkasse, einem mehrlagigen Gürtel und einem Laufstreifen mit drei radial übereinander angeordneten Schichten aus einem Laufstreifenunterteil und einem profilierten, Umfangsrillen aufweisenden Laufstreifenoberteil, wobei das profilierte Laufstreifenoberteil aus zwei in radialer Richtung aufeinander angeordneten Schichten aus unterschiedlichen Kautschukmischungen besteht, wobei die Kautschukmischung der radial äußersten Schicht des Laufstreifenoberteiles, welche mit der Fahrbahnoberfläche in Kontakt kommt, hinsichtlich der Eigenschaft Beständigkeit gegen Abrieb optimiert ist.

Ein derartiger Fahrzeugluftreifen ist aus der EP 2 108 530 B1 bekannt geworden. Der Laufstreifen weist ein Laufstreifenunterteil (auch "Base" genannt) und ein aus zwei in radialer Richtung aufeinander angeordneten Schichten aus unterschiedlicher Kautschukmischung bestehendes Laufstreifenoberteil (auch "Cap" genannt) auf. Der Laufstreifen besteht somit aus drei in radialer Richtung aufeinander angeordneten Schichten aus unterschiedlichen Kautschukmischungen. Die beiden Kautschukmischungen des Laufstreifenoberteils weisen eine voneinander abweichende Rückprallelastizität auf, während das Laufstreifenunterteil aus einer für Nutzfahrzeuge üblichen Base-Mischung besteht. Es wird der Zielkonflikt zwischen der Beständigkeit gegen unregelmäßigen Abrieb und dem Rollwiderstand auf einem höheren Niveau gelöst.

Aus der EP 2 108 525 A1 ist ferner ein Fahrzeugluftreifen, insbesondere für Nutzfahrzeuge, bekannt, wobei der Laufstreifen des Fahrzeugluftreifens in radialer Richtung aus einem Laufstreifenunterteil und einem Laufstreifenoberteil aus drei Schichten besteht. Die Kautschukmischungen der drei Schichten des Laufstreifenoberteils unterscheiden sich voneinander bezüglich der enthaltenen Menge an Butadien-Kautschuk, wobei die radial äußerste Schicht den größten Anteil an Butadien-Kautschuk aufweist und der Anteil an Butadien-Kautschuk in den beiden radial weiter innen liegenden Schichten in Richtung Reifeninnenseite von Schicht zu Schicht stufenweise abnimmt. Der Reifen soll gute Traktionseigenschaften, eine hohe Abriebfestigkeit und einen geringen Rollwiderstand aufweisen.

Eine wichtige Eigenschaft für den Laufstreifen von Fahrzeugluftreifen für Nutzfahrzeuge ist die Beständigkeit gegen Abrieb. Die Beständigkeit gegen Abrieb sollte möglichst groß sein, damit der Luftreifen eine lange Lebensdauer hat. Weiterhin ist es erwünscht, möglichst Treibstoff sparende Reifen einzusetzen, um den Kraftstoffverbrauch zu reduzieren. Weiterhin ist allgemein bekannt, dass im Bereich der Rillen, insbesondere an deren Rillengrund, Risse initiiert werden können, welche den Laufstreifen schädigen und ebenfalls die Lebensdauer des Reifens herabsetzten können.

Der Erfindung liegt die Aufgabe zugrunde, einen Fahrzeugluftreifen bereitzustellen, welcher in Bezug auf den Treibstoff sparsam ist und zudem eine möglichst lange Lebensdauer aufweist. Ferner ist es die Aufgabe der Erfindung, ein Verfahren zur Herstellung eines Laufstreifens für den vorgenannten Fahrzeugluftreifen bereitzustellen.

Gelöst wird die gestellte Aufgabe in Bezug auf den Fahrzeugluftreifen erfindungsgemäß dadurch,
dass die Kautschukmischung des Laufstreifenunterteils hinsichtlich der Eigenschaft Rollwiderstand optimiert ist,
dass die Kautschukmischung der radial äußersten Schicht des Laufstreifenoberteiles 60 phr bis 100 phr Naturkautschuk,
0 phr bis 40 phr Butadien-Kautschuk, wobei der Butadien-Kautschuk High cis-1.4 oder SSBR ist,
35 phr bis 80 phr Ruß, wobei der Ruß N234/N121/N339 ist,
0 phr bis 20 phr Kieselsäure oder weiteren Füllstoff,
0 phr bis 10 phr Weichmacher und
3 phr bis 10 phr Vernetzungsmittel enthält und
dass die Kautschukmischung der radial innersten Schicht des Laufstreifenoberteiles hinsichtlich der Eigenschaft Rissvermeidung in den Umfangsrillen optimiert ist, wobei diese Kautschukmischung
70 phr bis 100 phr Naturkautschuk,
0 phr bis 30 phr Butadien-Kautschuk, wobei der Butadien-Kautschuk High cis-1.4 oder SSBR ist,
30 phr bis 60 phr Ruß, wobei der Ruß N234/N121/N339 ist,
0 phr bis 20 phr Kieselsäure oder weiteren Füllstoff,
0 phr bis 10 phr Weichmacher und
3 phr bis 10 phr Vernetzungsmittel enthält.

Bei erfindungsgemäß ausgeführten Fahrzeugluftreifen für Nutzfahrzeuge weist der Laufstreifen drei radial übereinander angeordnete Schichten auf, wobei jede der drei Schichten für unterschiedliche Aufgaben optimierte Kautschukmischungen aufweist. Die radial äußerste Schicht ist hinsichtlich der Beständigkeit gegenüber Abrieb optimiert, die mittlere Schicht, welche die Gründe/ die Böden der Rillen der Profilierung umfasst, ist auf Vermeidung von Rissen im Bereich der Rillengründe optimiert und die radial innerste Schicht ist in Bezug auf den Rollwiderstand optimiert. Somit ist ein Fahrzeugluftreifen für Nutzfahrzeuge bereitgestellt, welcher in seiner Haltbarkeit verbessert ist und gleichzeitig sparsam hinsichtlich des Treibstoffverbrauches ist.

Vorteilhaft ist es, wenn das Laufstreifenunterteil aus einer Kautschukmischung enthaltend Naturkautschuk zwischen 80 - 100 phr, Butadien-Kautschuk, High cis-1.4 oder SSBR zwischen 0 - 20 phr, Ruß, N234/N121/N339 zwischen 20 - 50 phr, Kieselsäure oder weiterem Füllstoff 0 - 20 phr, Weichmacher zwischen 0 - 10 phr und Vernetzungsmittel zwischen 3 - 10 phr, besteht. Diese Kautschukmischung ist für einen verbesserten Rollwiderstand optimiert, wodurch weniger Treibstoff verbraucht wird.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

In einer Ausführung der Erfindung weisen die Schichten des Laufstreifenoberteiles übereinstimmende Dicken auf.

In einer anderen Ausführung der Erfindung kann jedoch auch vorgesehen sein, die Schichten unterschiedlich dick auszuführen, beispielsweise derart, dass ihre Dicke von der radial äußersten bis zur radial innersten Schicht zunimmt oder vice versa.

Zweckmäßig ist es, wenn die radial innerste Schicht des Laufstreifenoberteiles die Rillengründe der Umfangsrillen umfasst. Dadurch, dass die Rillengründe allseitig von der Kautschukmischung, welche auf Vermeidung von Rissen im Rillengrund optimiert ist, umschlossen sind, können Rissbildungen weitgehend vermieden werden.

In mindestens einer Umfangsrille kann im Rillengrund ein Abnutzungsindikator (TWI) angeordnet sein, der radial nach außen über den Rillengrund hinausragt und aufgrund seiner maximalen radialen Höhe, seinem maximalen Abstand in radialer Richtung zum Rillengrund, einen kritischen Reifenverschleiß anzeigt. Besonders zweckmäßig ist es, die Dicke der radial äußersten Schicht so zu gestalten, dass der mindestens eine Abnutzungsindikator nicht in diese radial äußerste Schicht hineinragt. So ist sichergestellt, dass die gegen Abrieb beständige äußerste Schicht komplett abgetragen ist, wenn der Abnutzungsindikator in seiner maximalen radialen Höhe abgetragen wird und dann den kritischen Reifenverschleiß anzeigt.

Gelöst wird die gestellte Aufgabe in Bezug auf das Verfahren zur Herstellung eines Laufstreifens eines Fahrzeugluftreifens für Nutzfahrzeuge nach einem oder mehreren der vorangehenden Ausführungen, wobei die Kautschukmischung des Laufstreifenunterteils hinsichtlich der Eigenschaft Rollwiderstand optimiert ist, wobei die Kautschukmischung der radial äußersten Schicht des Laufstreifenoberteiles, welche mit der Fahrbahnoberfläche in Kontakt kommt, hinsichtlich der Eigenschaft Beständigkeit gegen Abrieb (wear) optimiert ist und wobei die Kautschukmischung der radial innersten Schicht des Laufstreifenoberteiles hinsichtlich der Eigenschaft Rissvermeidung in den Umfangsrillen optimiert ist, erfindungsgemäß dadurch, dass man den Laufstreifen mittels eines Triplex-Extruders extrudiert, wobei der Spritzkopf des Extruders derart aufgebaut ist, dass der extrudierte Laufstreifen im Querschnitt im Bereich der späteren Umfangsrillen entsprechend konturierte Nuten aufweist.

Dabei ist es zweckmäßig, um Verquetschungen der unterschiedlichen Kautschukmischungen zu vermeiden, wenn die Nuten durch im Spritzkopf angeordnete Schneiden in den dreischichtigen endlosen Laufstreifen geschnitten werden.

Weitere Merkmale, Vorteile und Einzelheiten der Erfindung werden nun anhand der Zeichnungen, die schematisch ein Ausführungsbeispiel darstellen, näher beschrieben. Dabei zeigen die
Fig. 1 eine Ausführungsform der Erfindung anhand eines Querschnittes durch einen Fahrzeugluftreifen im Bereich des Laufstreifens und
Fig. 2 einen Querschnitt des Laufstreifens der Fig.1 mit Profilierung direkt nach erfolgter Extrusion.

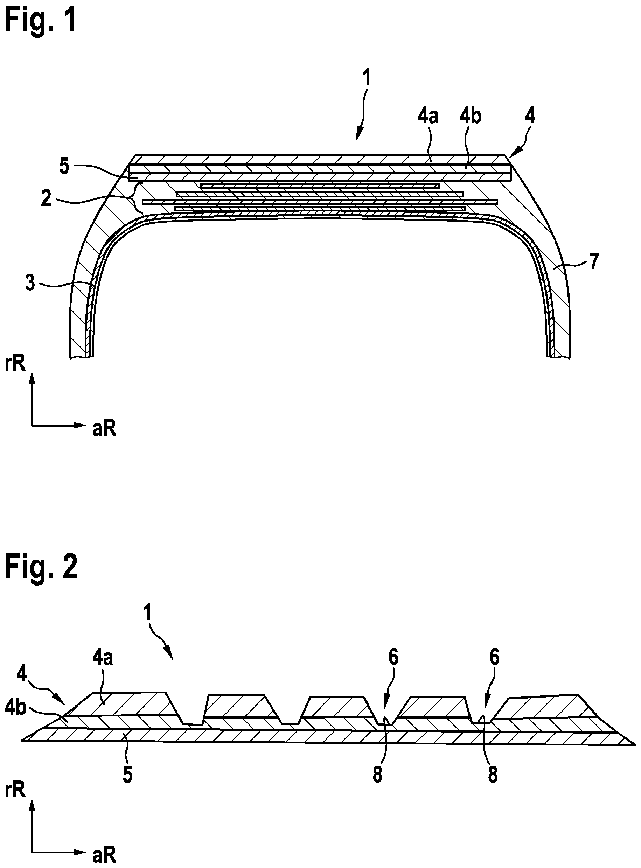

Die Fig. 1 zeigt einen vereinfachten Querschnitt durch den Laufstreifenbereich von Luftreifen für Nutzfahrzeugen, wobei von den üblichen Bauteilen des Reifens ein Laufstreifen 1, ein Gürtel 2 bestehend aus vier Gürtellagen mit in Gummi eingebetteten, vorzugsweise aus Stahlkord bestehenden Festigkeitsträgern, und eine ebenfalls mit Festigkeitsträgern verstärkte Radialkarkasse 3 dargestellt sind. Von den Seitenwänden 7 des Reifens sind lediglich die radial äußeren Endabschnitte gezeigt. Nicht dargestellt sind Wulstbereiche mit Wulstkernen, Kernprofilen und sonstigen Wulstbauteilen.

Der Laufstreifen 1 ist in bekannter Weise in ein Laufstreifenoberteil 4 und ein Laufstreifenunterteil 5 geteilt. Eine Profilierung ist nicht dargestellt. Das Laufstreifenunterteil 5 weist eine im Wesentlichen konstante Stärke in der Größenordnung von 2 mm bis 5 mm auf und besteht aus einer Kautschukmischung, welche hinsichtlich der Eigenschaft Rollwiderstand optimiert ist. Eine beispielsweise Kautschukmischung ist in der nachfolgenden Tabelle 1 genannt.

Das Laufstreifenoberteil 4 ist jener Teil des Laufstreifens 1, welcher mit einer nur in der Fig. 2 gezeigten Profilierung mit Umfangsrillen versehen ist, wobei die Fig. 2 den frisch extrudierten Querschnitt eines Laufstreifens zeigt, bei dem die Umfangsrillen als Nuten 6 "vorgeschnitten" sind. Das richtige Profil wird später, wenn der Rohreifen mit dem Bauteil Laufstreifen belegt ist und vulkanisiert wird, eingepresst.

Gemäß der Erfindung besteht das Laufstreifenoberteil 4 aus zwei übereinander angeordneten Schichten 4a, 4b. Diese zwei Schichten 4a, 4b weisen eine Dicke in der Größenordnung von 14 mm bis 22 mm auf. Die Kautschukmischung der radial äußersten Schicht 4a des Laufstreifenoberteiles 4, welche mit der Fahrbahnoberfläche in Kontakt kommt, ist hinsichtlich der Eigenschaft Beständigkeit gegen Abrieb optimiert und die Kautschukmischung der radial innersten Schicht 4b des Laufstreifenoberteiles 4 ist hinsichtlich der Eigenschaft Rissvermeidung in den Rillen optimiert. Eine Kautschukmischung, welche hinsichtlich der Beständigkeit gegen Abrieb optimiert ist und eine weitere Kautschukmischung, welche hinsichtlich der Vermeidung von Rissbildungen in den Rillengründen optimiert ist, ist in der nachfolgenden Tabelle 1 genannt.

**Tabelle 1**

| Kautschukmischung, enthaltend (in phr) | radial äußerste Schicht des Laufstreifenoberteiles | radial innerste Schicht des Laufstreifenoberteiles | Laufstreifenunterteil |
|---|---|---|---|
| Naturkautschuk | 100 | 100 | 100 |
| Butadien-Kautschuk, High cis-1.4 oder SSBR | 0 | 0 | 0 |
| Ruß, N234/N121/N339 | 55 | 45 | 40 |
| Kieselsäure oder weiterer Füllstoff | 0 | 13 | 15 |
| Weichmacher | 0 | 0 | 0 |
| Vernetzungsmittel | 7.5 | 7.5 | 8.5 |
| Abrieb (%, Straßentest) | 120 | 105 | 100 |
| Rückprall (RT) | 43 | 42 | 54 |

Es ist aus Tests ersichtlich, dass der Abrieb der radial äußersten Schicht des Laufstreifenoberteils hinsichtlich der radial innersten Schicht des Laufstreifenoberteiles und hinsichtlich des Laufstreifenunterteils einen um 15% bzw. 20% verbesserten Abrieb aufweist, wobei der Abrieb im Straßentest (L-EXT) ermittelt worden ist. Es ist ebenfalls ersichtlich, dass das Laufstreifenunterteil hinsichtlich der Rückprallelastizität und somit hinsichtlich des Rollwiderstandes Vorteile bezüglich der anderen beiden Schichten aufweist. Die Rückprallelastizität ist ermittelt mittels eines Pendelschlagwerks nach DIN 53512:2000-04 (Ausführung nach Schob) der Fa. Zwick, Typ 5109.

Die Fig. 2 zeigt einen Querschnitt durch den extrudierten Laufstreifen, welcher später als Reifenbauteil für Luftreifen für Nutzfahrzeuge der Fig. 1 verwendet wird. Die hinsichtlich der Vermeidung von Rissbildungen im Rillengrund 8 optimierte Kautschukmischung umschließt die Rillengründe. Die radial innerste Schicht 4b weist dabei eine Dicke auf, welche 10% - 30% der Dicke des gesamten Laufstreifenoberteiles 4 entspricht.

### Bezugsziffernliste

- 1: Laufstreifen
- 2: Gürtel
- 3: Radialkarkasse
- 4: Laufstreifenoberteil
- 4a: Schicht
- 4b: Schicht
- 5: Laufstreifenunterteil
- 6: Nut
- 7: Seitenwand
- 8: Rillengrund

- rR: Radiale Richtung
- aR: Axiale Richtung

## Patentansprüche

1. Fahrzeugluftreifen für Nutzfahrzeuge mit einer Radialkarkasse, einem mehrlagigen Gürtel (2) und einem Laufstreifen (1) mit drei radial übereinander angeordneten Schichten (4a, 4b, 5) aus einem Laufstreifenunterteil (5) und einem profilierten, Umfangsrillen aufweisenden Laufstreifenoberteil (4), wobei das profilierte Laufstreifenoberteil (4) aus zwei in radialer Richtung aufeinander angeordneten Schichten (4a, 4b) aus unterschiedlichen Kautschukmischungen besteht, wobei die Kautschukmischung der radial äußersten Schicht (4a) des Laufstreifenoberteiles (4), welche mit der Fahrbahnoberfläche in Kontakt kommt, hinsichtlich der Eigenschaft Beständigkeit gegen Abrieb optimiert ist,
**dadurch gekennzeichnet,**
**dass** die Kautschukmischung des Laufstreifenunterteils (5) hinsichtlich der Eigenschaft Rollwiderstand optimiert ist,
**dass** die Kautschukmischung der radial äußersten Schicht (4a) des Laufstreifenoberteiles (4)
60 phr bis 100 phr Naturkautschuk,
0 phr bis 40 phr Butadien-Kautschuk, wobei der Butadien-Kautschuk High cis-1.4 oder SSBR ist,
35 phr bis 80 phr Ruß, wobei der Ruß N234/N121/N339 ist,
0 phr bis 20 phr Kieselsäure oder weiteren Füllstoff,
0 phr bis 10 phr Weichmacher und
3 phr bis 10 phr Vernetzungsmittel enthält und
**dass** die Kautschukmischung der radial innersten Schicht (4b) des Laufstreifenoberteiles (4) hinsichtlich der Eigenschaft Rissvermeidung in den Umfangsrillen optimiert ist,
wobei diese Kautschukmischung
70 phr bis 100 phr Naturkautschuk,
0 phr bis 30 phr Butadien-Kautschuk, wobei der Butadien-Kautschuk High cis-1.4 oder SSBR ist,
30 phr bis 60 phr Ruß, wobei der Ruß N234/N121/N339 ist,
0 phr bis 20 phr Kieselsäure oder weiteren Füllstoff,
0 phr bis 10 phr Weichmacher und
3 phr bis 10 phr Vernetzungsmittel enthält.

2. Fahrzeugluftreifen nach Anspruch 1, **dadurch gekennzeichnet, dass** das Laufstreifenunterteil (5) aus einer Kautschukmischung enthaltend Naturkautschuk zwischen 80 - 100 phr, Butadien-Kautschuk, High cis-1.4 oder SSBR zwischen 0 - 20 phr, Ruß, N234/N121/N339 zwischen 20 - 50 phr, Kieselsäure oder weiterem Füllstoff 0 - 20 phr, Weichmacher zwischen 0 - 10 phr und Vernetzungsmittel zwischen 3 - 10 phr, besteht.

3. Fahrzeugluftreifen nach Anspruch 1 oder 2, **dadurch gekennzeichnet, dass** die Schichten (4a, 4b) des Laufstreifenoberteiles (4) übereinstimmende Dicken aufweisen.

4. Fahrzeugluftreifen nach einem der Ansprüche 1 bis 3, **dadurch gekennzeichnet, dass** die radial innerste Schicht (4b) des Laufstreifenoberteiles (4) die Rillengründe (8) der Umfangsrillen umfasst.

5. Fahrzeugluftreifen nach einem der Ansprüche 1 bis 4, **dadurch gekennzeichnet, dass** in mindestens einer Umfangsrille im Rillengrund ein Abnutzungsindikator angeordnet ist, der radial nach außen über den Rillengrund hinausragt und aufgrund seiner maximalen radialen Höhe einen kritischen Reifenverschleiß anzeigt, wobei die Dicke der radial äußersten Schicht (4a) so gestaltet ist, dass der Abnutzungsindikator mit seiner maximalen radialen Höhe nicht in die radial äußerste Schicht (4a) hineinragt.

6. Verfahren zur Herstellung eines Laufstreifens eines Fahrzeugluftreifens für Nutzfahrzeuge nach einem oder mehreren der vorangehenden Ansprüche 1 bis 5, wobei die Kautschukmischung des Laufstreifenunterteils (5) hinsichtlich der Eigenschaft Rollwiderstand optimiert ist, wobei die Kautschukmischung der radial äußersten Schicht (4a) des Laufstreifenoberteiles (4), welche mit der Fahrbahnoberfläche in Kontakt kommt, hinsichtlich der Eigenschaft Beständigkeit gegen Abrieb optimiert ist und wobei die Kautschukmischung der radial innersten Schicht (4b) des Laufstreifenoberteiles (4) hinsichtlich der Eigenschaft Rissvermeidung in den Umfangsrillen optimiert ist, **dadurch gekennzeichnet,**
**dass** man den Laufstreifen mittels eines Triplex-Extruders extrudiert, wobei der Spritzkopf des Extruders derart aufgebaut ist, dass der extrudierende Laufstreifen (1) im Querschnitt im Bereich der späteren Umfangsrillen entsprechend konturierte Nuten (6) aufweist.

7. Verfahren zur Herstellung eines Laufstreifens (1) eines Fahrzeugluftreifens für Nutzfahrzeuge nach Anspruch 6, **dadurch gekennzeichnet, dass** die Nuten (6) durch im Spritzkopf angeordnete Schneiden in den Laufstreifen (1) geschnitten werden.

## Claims

1. Pneumatic vehicle tyre for commercial vehicles comprising a radial carcass, a multilayered belt (2) and a tread (1) having three layers (4a, 4b, 5) radially arranged one atop the other and composed of a tread lower portion (5) and a profiled tread upper portion (4) comprising circumferential grooves, wherein the profiled tread upper portion (4) is composed of two layers (4a, 4b) of different rubber mixtures arranged one atop the other in the radial direction, wherein the rubber mixture of the radially outermost layer (4a) of the tread upper portion (4) which comes into contact with the roadway surface is optimized with respect to the characteristic of resistance to abrasion,
**characterized**
**in that** the rubber mixture of the tread lower portion (5) is optimized with respect to the characteristic of rolling resistance,
**in that** the rubber mixture of the radially outermost layer (4a) of the tread upper proportion (4) contains
60 phr to 100 phr of natural rubber,
0 phr to 40 phr of butadiene rubber, wherein the butadiene rubber is high cis-1,4 or SSBR,
35 phr to 80 phr of carbon black, wherein the carbon black is N234/N121/N339,
0 phr to 20 phr of silica or further filler,
0 phr to 10 phr of plasticizer and
3 phr to 10 phr of crosslinking agent and
**in that** the rubber mixture of the radially innermost layer (4b) of the tread upper portion (4) is optimized with respect to the characteristic of tear prevention in the circumferential grooves,
wherein this rubber mixture contains
70 phr to 100 phr of natural rubber,
0 phr to 30 phr of butadiene rubber, wherein the butadiene rubber is high cis-1,4 or SSBR,
30 phr to 60 phr of carbon black, wherein the carbon black is N234/N121/N339,
0 phr to 20 phr of silica or further filler,
0 phr to 10 phr of plasticizer and
3 phr to 10 phr of crosslinking agent.

2. Pneumatic vehicle tyre according to Claim 1, **characterized in that** the tread lower portion (5) is composed of a rubber mixture containing 80-100 phr of natural rubber, 0-20 phr of butadiene rubber, high cis-1,4 or SSBR, 20-50 phr of N234/N121/N339 carbon black, 0-20 phr of silica or further filler, 0-10 phr of plasticizer and 3-10 phr of crosslinking agent.

3. Pneumatic vehicle tyre according to Claim 1 or 2, **characterized in that** the layers (4a, 4b) of the tread upper portion (4) have matching thicknesses.

4. Pneumatic vehicle tyre according to any of Claims 1 to 3, **characterized in that** the radially innermost layer (4b) of the tread upper portion (4) comprises the groove bottoms (8) of the circumferential grooves.

5. Pneumatic vehicle tyre according to any of Claims 1 to 4, **characterized in that** in at least one circumferential groove in the groove bottom a wear indicator which protrudes radially outwards beyond the groove bottom and due to its maximum radial height indicates critical tyre wear is arranged, wherein the thickness of the radially outermost layer (4a) is configured such that the wear indicator does not protrude into the radially outermost layer (4a) with its maximum radial height.

6. Process for producing a tread of a pneumatic vehicle tyre for commercial vehicles according to one or more of the preceding Claims 1 to 5, wherein the rubber mixture of the tread lower portion (5) is optimized with respect to the characteristic of rolling resistance, wherein the rubber mixture of the radially outermost layer (4a) of the tread upper portion (4) which comes into contact with the roadway surface is optimized with respect to the characteristic of resistance to abrasion
and wherein the rubber mixture of the radially innermost layer (4b) of the tread upper portion (4) is optimized with respect to the characteristic of tear prevention in the circumferential grooves, **characterized in that**
the tread is extruded by means of a triplex extruder, wherein the injection head of the extruder is constructed in such a way that in cross section the tread (1) being extruded has correspondingly contoured grooves (6) in the region of the later circumferential grooves.

7. Process for producing a tread (1) of a pneumatic vehicle tyre for commercial vehicles according to Claim 6, **characterized in that** the grooves (6) are cut into the tread (1) by cutting edges arranged in the extrusion head.

## Revendications

1. Pneumatique de véhicule pour véhicules utilitaires, avec une carcasse radiale, une ceinture (2) à plusieurs couches et une bande de roulement (1) avec trois couches (4a, 4b, 5) agencées radialement les unes au-dessus des autres, composée d'une partie inférieure de bande de roulement (5) et d'une partie supérieure de bande de roulement (4) profilée, présentant des rainures circonférentielles, la partie supérieure de bande de roulement profilée (4) étant constituée de deux couches (4a, 4b) de mélanges de caoutchouc différents, agencées l'une sur l'autre dans la direction radiale, le mélange de caoutchouc de la couche radialement la plus extérieure (4a) de la partie supérieure de bande de roulement (4), qui vient en contact avec la surface de la chaussée, étant optimisé en ce qui concerne la propriété de résistance à l'abrasion,
**caractérisé**
**en ce que** le mélange de caoutchouc de la partie inférieure de bande de roulement (5) est optimisé en ce qui concerne la propriété de résistance au roulement,
**en ce que** le mélange de caoutchouc de la couche radialement la plus extérieure (4a) de la partie supérieure de bande de roulement (4) contient
60 pce à 100 pce de caoutchouc naturel,
0 pce à 40 pce de caoutchouc de butadiène, dans lequel le caoutchouc de butadiène est du high cis-1.4 ou du SSBR,
35 pce à 80 pce de noir de carbone, le noir de carbone étant N234/N121/N339,
0 pce à 20 pce de silice ou autre charge,
0 pce à 10 pce de plastifiant et
3 pce à 10 pce d'agent de réticulation, et
**en ce que** le mélange de caoutchouc de la couche radialement la plus intérieure (4b) de la partie supérieure de bande de roulement (4) est optimisé en ce qui concerne la propriété de prévention des fissures dans les rainures circonférentielles,
ce mélange de caoutchouc contenant
70 pce à 100 pce de caoutchouc naturel,
0 pce à 30 pce de caoutchouc de butadiène, dans lequel le caoutchouc de butadiène est du high cis-1.4 ou du SSBR,
30 pce à 60 pce de noir de carbone, le noir de carbone étant N234/N121/N339,
0 pce à 20 pce de silice ou autre charge,
0 pce à 10 pce de plastifiant et
3 pce à 10 pce d'agent de réticulation.

2. Pneumatique de véhicule selon la revendication 1, **caractérisé en ce que** la partie inférieure de bande de roulement (5) est constituée d'un mélange de caoutchouc contenant du caoutchouc naturel entre 80 et 100 pce, du caoutchouc de butadiène, high cis-1.4 ou SSBR entre 0 et 20 pce, du noir de carbone, N234/N121/N339 entre 20 et 50 pce, de la silice ou une autre charge entre 0 et 20 pce, un plastifiant entre 0 et 10 pce et un agent de réticulation entre 3 et 10 pce.

3. Pneumatique de véhicule selon la revendication 1 ou 2, **caractérisé en ce que** les couches (4a, 4b) de la partie supérieure (4) de la bande de roulement ont des épaisseurs concordantes.

4. Pneumatique de véhicule selon l'une quelconque des revendications 1 à 3, **caractérisé en ce que** la couche radialement la plus intérieure (4b) de la partie supérieure de bande de roulement (4) comprend les fonds de rainure (8) des rainures circonférentielles.

5. Pneumatique de véhicule selon l'une quelconque des revendications 1 à 4, **caractérisé en ce qu'**un indicateur d'usure est agencé dans au moins une rainure circonférentielle dans le fond de rainure, qui fait saillie radialement vers l'extérieur au-delà du fond de rainure et qui indique une usure critique du pneumatique en raison de sa hauteur radiale maximale, l'épaisseur de la couche radialement la plus extérieure (4a) étant conçue de telle sorte que l'indicateur d'usure ne fait pas saillie avec sa hauteur radiale maximale dans la couche radialement la plus extérieure (4a).

6. Procédé de fabrication d'une bande de roulement d'un pneumatique de véhicule pour véhicules utilitaires selon une ou plusieurs des revendications 1 à 5 précédentes, dans lequel le mélange de caoutchouc de la partie inférieure de bande de roulement (5) est optimisé en ce qui concerne la propriété de résistance au roulement, dans lequel le mélange de caoutchouc de la couche radialement la plus extérieure (4a) de la partie supérieure de bande de roulement (4), qui vient en contact avec la surface de la chaussée, est optimisé en ce qui concerne la propriété de résistance à l'usure
et dans lequel le mélange de caoutchouc de la couche radialement la plus intérieure (4b) de la partie supérieure de bande de roulement (4) est optimisé en ce qui concerne la propriété de prévention des fissures dans les rainures circonférentielles, **caractérisé**
**en ce que** la bande de roulement est extrudée au moyen d'une extrudeuse triplex, la tête d'injection de l'extrudeuse étant construite de telle sorte que la bande de roulement (1) en cours d'extrusion présente en section transversale, dans la zone des futures rainures circonférentielles des sillons (6) aux contours correspondants.

7. Procédé de fabrication d'une bande de roulement (1) d'un pneumatique de véhicule pour véhicules utilitaires selon la revendication 6, **caractérisé en ce que** les sillons (6) sont découpés dans la bande de roulement (1) par des lames agencées dans la tête d'injection.
